Europäisches Patentamt

European Patent Office

Office européen des brevets

(11) Numéro de publication: **0 148 670**
**A2**

(12) # DEMANDE DE BREVET EUROPEEN

(21) Numéro de dépôt: 84402489.3

(22) Date de dépôt: 04.12.84

(51) Int. Cl.⁴: **B 60 T 13/24,** F 16 B 7/20, B 60 T 7/04

(30) Priorité: 27.12.83 FR 8320868

(43) Date de publication de la demande: 17.07.85 Bulletin 85/29

(84) Etats contractants désignés: BE CH DE GB IT LI SE

(71) Demandeur: **AUTOMOBILES PEUGEOT, 75, avenue de la Grande Armée, F-75116 Paris (FR)**
Demandeur: **AUTOMOBILES CITROEN, 62 Boulevard Victor-Hugo, F-92200 Neuilly-sur-Seine (FR)**

(72) Inventeur: **Gillet, Guy, 16 Route de Breançon, F-95640 Marines (FR)**

(74) Mandataire: **Polus, Camille et al, c/o Cabinet Lavoix 2, Place d'Estienne d'Orves, F-75441 Paris Cedex 09 (FR)**

(54) Dispositif de fixation d'un amplificateur pneumatique de freinage sur un véhicule automobile.

(57) Dispositif de fixation d'un amplificateur pneumatique (7) de freinage sur un support (1, 4) faisant partie de la structure d'un véhicule automobile, caractérisé en ce qu'il comprend des pattes (12) disposées radialement autour d'une partie cylindrique (13) de l'amplificateur (7) et destinées à coopérer, après engagement axial suivi d'une rotation, avec des portées (11) de retenue axiale formées autour d'un orifice (24) sensiblement circulaire ménagé dans le support (4), un moyen élastique (18) étant interposé entre le support (1) et l'amplificateur (7).

Cet agencement simplifie et facilite le montage de l'amplificateur en permettant de le monter sans avoir besoin d'accéder au côté du support opposé à celui par où l'amplificateur (7) est introduit.

Dispositif de fixation d'un amplificateur pneumatique
de freinage sur un véhicule automobile.-

L'invention concerne un dispositif de fixation d'un amplificateur pneumatique de freinage sur un support faisant partie de la structure d'un véhicule automobile.

Les amplificateurs pneumatiques de freinage utilisés sur les véhicules automobiles sont habituellement fixés sur leur support au moyen de goujons et d'écrous, ce qui présente un certain nombre d'inconvénients pour le montage : l'amplificateur doit être présenté d'un côté du support alors que les écrous doivent être mis en place et serrés par l'autre côté : cette opération est généralement pénible car elle doit être exécutée dans une position peu confortable.

L'invention a pour but de simplifier l'opération de montage qui peut alors être effectuée plus rapidement, sans avoir à accéder au côté du support opposé à celui par lequel l'amplificateur est présenté.

Suivant l'invention, le dispositif de fixation d'un amplificateur pneumatique de freinage sur un support faisant partie de la structure du véhicule est caractérisé en ce qu'il comprend des pattes disposées radialement autour d'une partie cylindrique de l'amplificateur et destinées à coopérer, après engagement axial suivi d'une rotation, avec des portées de retenue axiale formées autour d'un orifice sensiblement circulaire ménagé dans le support, un moyen élastique étant interposé entre le support et l'amplificateur.

On comprend que dans ces conditions, il n'est plus nécessaire à l'opérateur d'avoir accès au côté du support opposé à celui par lequel l'amplificateur est présenté pour monter et verrouiller ce dernier.

De préférence, le support comporte une collerette bordant son ouverture circulaire et sur laquelle sont ménagées, d'une part, des encoches permettant l'engagement axial de l'amplificateur et, d'autre part,

2

lesdites portées de retenue axiale des pattes.

Suivant une autre caractéristique, chaque portée de retenue présente, dans le sens par lequel la patte correspondante est introduite, d'abord une partie inclinée permettant la compression du moyen élastique pendant la rotation de l'amplificateur, puis une partie concave, qui, associée à une partie convexe conjuguée de la patte, assure le verrouillage de cette dernière et de l'amplificateur sur le support.

De préférence, l'une des pattes radiales et l'une des encoches sont plus étroites que les autres de manière à réaliser un détrompeur assurant un positionnement angulaire correct de l'amplificateur.

Suivant un mode particulier de réalisation, le support de l'amplificatuer constitue également le support des pédales d'embrayage et de freinage.

D'autres caractéristiques et avantages de l'invention résulteront de la description qui suit, en référence aux dessins annexés dans lesquels :

- la Figure 1 est une vue en coupe axiale d'un mode de réalisation du dispositif selon l'invention;

- la Figure 2 est une vue en coupe transversale suivant la ligne II-II de la Figure 1;

- la Figure 3 est une vue en coupe axiale suivant la ligne III-III de la Figure 2;

- la Figure 4 est une vue en coupe suivant la ligne IV-IV de la Figure 1.

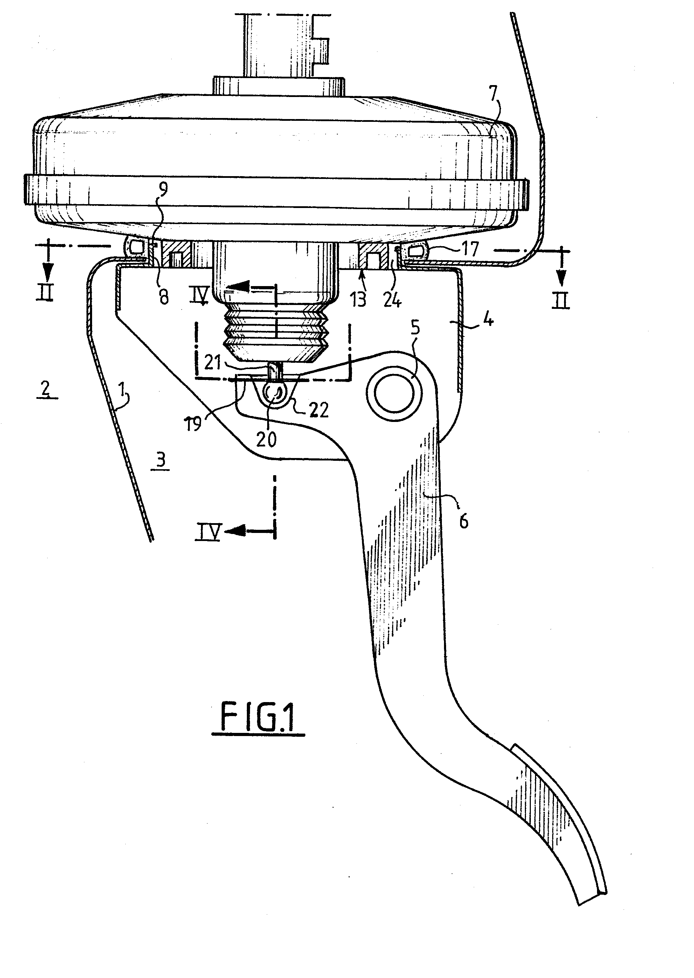

On voit, sur la Figure 1, une partie d'un tablier 1 d'un véhicule automobile séparant un compartiment moteur 2 d'un habitacle 3 et constituant un élément de structure. Sur ce tablier 1 est fixé, par exemple par soudure, un support 4 de pédales portant un axe 5, sur lequel sont articulées une pédale d'embrayage, non représentée, et une pédale de freinage 6.

0148670

3

Le support 4 de pédales est également utilisé comme support pour un amplificateur pneumatique de freinage 7. Dans ce but, le support 4 comporte une partie cylindrique 8 traversant le tablier 1 et limitée par une collerette intérieure 9, qui délimite un orifice circulaire 24.

Sur cette collerette 9 sont ménagées des encoches 10, au nombre de quatre dans cet exemple, séparées par des portées 11 destinées à coopérer avec autant de pattes 12 faisant saillie radialement à l'extérieur d'une bague 13 fixée à l'amplificateur 7 par des goujons 14.

Chaque portée 11 comporte un pan incliné 11a et une surface concave 11b qui peut coopérer avec une surface convexe conjuguée d'une des pattes 12. Les pans inclinés 11a assurent le raccordement entre les surfaces concaves 11b et la collerette 9. Au moins une saillie intérieure 16, ménagée dans la partie cylindrique 8, forme butée pour une des pattes 12.

L'une des encoches 10a et l'une des pattes 12a, sont plus étroites que les autres, si bien que l'amplificateur 7 ne peut être engagé que pour une position angulaire donnée.

Un joint annulaire 17, relativement souple, par exemple grâce à une forme tubulaire, est disposé entre le tablier 1 et l'amplificateur 7 pour assurer l'étanchéité entre le compartiment moteur 2 et l'habitacle 3. Ce joint comporte quatre bourrelets intérieurs 18, de forte raideur, disposés entre les portées 11 et l'amplificateur 7. Ces bourrelets constituent un moyen élastique assurant le maintien des pattes 12 en position contre la surface concave des portées 11.

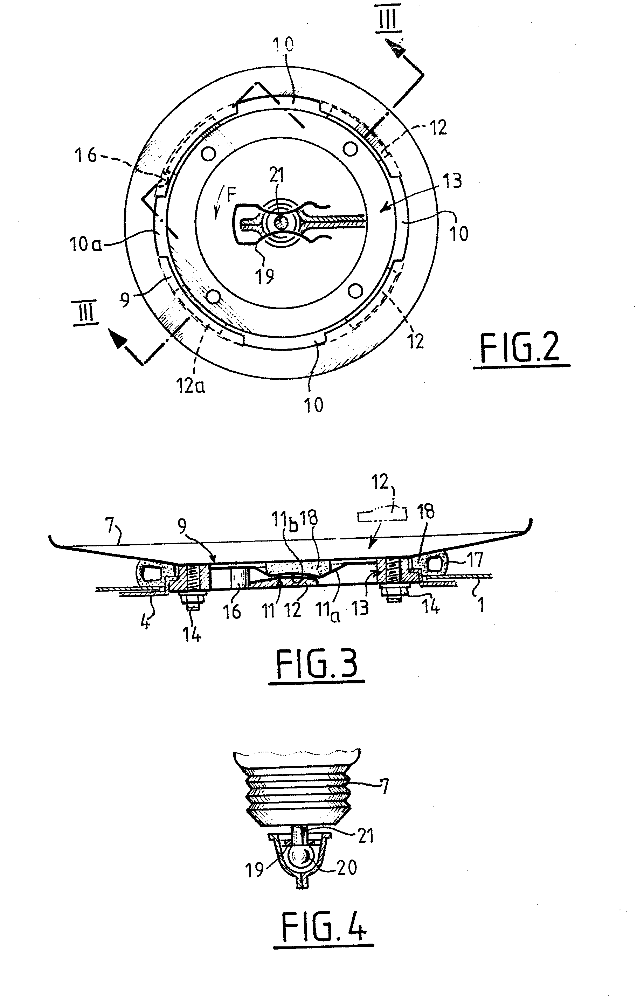

Le montage de l'amplificateur 7 sur le support 1, 4 s'effectue très simplement, sans qu'il soit nécessaire d'accéder dans l'habitacle du véhicule. En effet, l'amplificateur 7 et sa bague 13 étant disposés

4

au-dessus de l'orifice circulaire 24, il suffit d'engager axialement les pattes 12 dans les encoches correspondantes 10, puis d'effectuer une rotation dans le sens anti-horaire de la flèche F (Figure 2). Les pattes 12 glissent d'abord le long des pans inclinés 11a, ce qui assure la compression des bourrelets 18, et le mouvement de rotation est stoppé par butée d'une des pattes 12 sur la saillie 16. Les pattes 12 sont alors correctement verrouillées du fait de la forme concave 11b des portées 11 et de l'action des bourrelets élastiques 18.

On notera également que la liaison entre l'amplificateur 7 et la pédale 6 est assurée par simple encliquetage, à travers une agrafe élastique 19, d'une rotule 20 terminant la tige 21 d'actionnement de l'amplificateur, dans un logement 22 formé sur la pédale 6.

L'opérateur peut monter l'amplificateur 7 sans avoir besoin d'accéder au côté du support 1 opposé à celui par où l'amplificateur 7 est introduit, ce qui facilite considérablement le montage de ce dernier qui de plus est exécuté sans serrage d'écrous.

Le nombre d'encoches 10 et de portées 11 peut évidemment varier, et pourrait par exemple être réduit à trois.

5

REVENDICATIONS

1 - Dispositif de fixation d'un amplificateur pneumatique (7) de freinage sur un support (1, 4) faisant partie de la structure d'un véhicule automobile, caractérisé en ce qu'il comprend des pattes (12) disposées radialement autour d'une partie cylindrique (8) de l'amplificateur (7) et destinées à coopérer, après engagement axial suivi d'une rotation, avec des portées (11) de retenue axiale formées autour d'un orifice (24) sensiblement circulaire ménagé dans le support (4), un moyen élastique (18) étant interposé entre le support (4) et l'amplificateur (7), et chaque portée (11) de retenue présente, dans le sens (F) par lequel la patte correspondante (12) est introduite, d'abord un pan incliné (11a) permettant la compression du moyen élastique (18) pendant la rotation de l'amplificateur (7), puis une partie concave (11b), qui associée à une partie convexe conjuguée de la patte (12), assure le verrouillage de cette dernière et de l'amplificateur (7) sur le support (1, 4).

2 - Dispositif selon la revendication 1, caractérisé en ce que l'une (12a) des pattes (12) et l'une (10a) des encoches (10) sont plus étroites que les autres de manière à raliser un détrompeur assurant un positionnement angulaire correct de l'amplificateur (7).

3 - Dispositif selon l'une des revendications 1 et 2, caractérisé en ce qu'un joint annulaire (17) relativement souple est disposé entre le support (1) et l'amplificateur (7) pour assurer l'étanchéité entre un compartiment moteur (2) et un habitacle (3) du véhicule, ce joint (17) comportant des bourrelets (18) de forte raideur, disposés entre les portées (11) et l'amplificateur (7).

FIG.1

FIG.2

FIG.3

FIG.4